# EUROPEAN PATENT SPECIFICATION

(11) **EP 1 999 006 B1**
(45) Date of publication and mention of the grant of the patent: **16.05.2012**
(21) Application number: 06732968.0
(22) Date of filing: 29.03.2006
(51) Int. Cl.: B62J 1/16, B62J 11/00, B62J 7/06

(54) **BICYCLE CHILD SEAT MOUNTING ASSEMBLY**
FAHRRADKINDERSITZBEFESTIGUNGSANORDNUNG
ENSEMBLE DE MONTAGE DE SIEGE D'ENFANT POUR BICYCLETTE

(43) Date of publication of application: 10.12.2008
(73) Proprietor: Dremefa B.V., 6983 BM Doesburg (NL)
(72) Inventor: KNAVEN, Franciscus, Arnoldus, 6983 BM Doesburg (NL)
(74) Representative: Houben, Christiaan Hein Willem Frans
(86) International application number: PCT/NL2006/000161
(87) International publication number: WO 2007/111497

(56) References cited:
- FR-A1- 2 764 262
- US-A- 3 902 737
- US-A- 5 104 188
- US-A- 5 927 801

## Description

The present invention relates to a mounting assembly for mounting a child seat on a bicycle. The mounting assembly comprises a support member and clamping means for attaching the support member to a head portion of a bicycle frame. The support member is provided with one or more receiving sockets each for receiving an assembly member fixedly attached to the child seat and protruding therefrom. The sockets in a mounted state substantially extend parallel with the steering axis.

Child seats which have to be mounted on a front portion of a bicycle are known in the art.

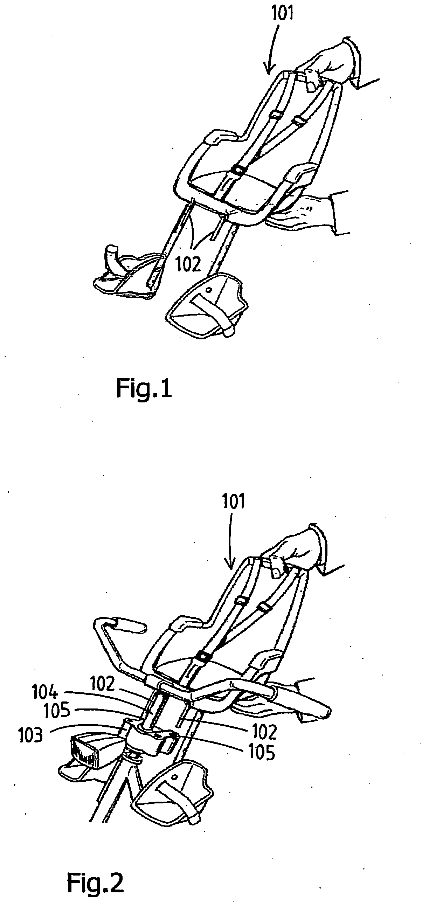

In Fig. 1 is shown a child seat 101 manufactured by the applicant. The seat 101 has as assembly members two assembly pins 102 on the front extending from the seat 101 downwardly. In Fig. 2 is shown a known mounting assembly to attach the seat 101 to the bicycle. A mounting clamp 103 is attached to the steering stem 104 of the bicycle. The mounting clamp 103 has two cylindrical sockets 105 in which the pins 102 of the seat 101 can be inserted. With this known mounting assembly the child seat 101 is turning with the steering stem 104 and thus with the steering handlebar.

In US 3 902 737 is disclosed a child seat with a seat member which is mounted on the bicycle frame. The child seat has as assembly members downwardly extending tubular leg portions. A clamp comprising a pair of cooperating members is in a mounted state attached to the headpost of the bicycle frame between two frame bars. One of the members has a pair of cylindrical sockets formed on the sides for receiving the leg portions of the seat. The child seat may be removably attached to the clamp by inserting the leg portions in the cylindrical sockets of the clamp. The seat can be simply removed from the bicycle by withdrawing the leg portions from the respective sockets leaving the clamp attached to the bicycle. With this known mounting assembly the child seat does not turn with the steering handlebar.

In recent years all kinds of leisure bicycles have gained more and more popularity. Therefore a whole range of frame shapes and frame structures is found on the bicycle market. A problem that occurs with dedicated mounting assemblies for child seats is that they cannot be fit to a wide range of frames. For example the mounting assembly of US 3 902 737 is suitable to be fit to a bicycle frame wherein the joints between the bars, e.g. a cross bar and a diagonal bracing bar and the head post of the frame leave enough inbetween space such that the clamp may be mounted on the head post. However, leisure bikes like e.g. All Terrain Bikes (ATB) often do not have this space available and a mounting assembly for a child seat cannot be used. Also, often leisure bicycles like ATB's have a relatively short distance between the steering bar and the steering head such that a mounting clamp, which is illustrated in Fig. 2, cannot be used.

The invention has for an object to provide an improved mounting assembly for mounting a child seat on a bicycle.

This object is achieved by a mounting assembly of the type as described in the preamble of claim 1, characterized in that the support member has a bearing portion for engaging an upper side of a substantially horizontal cross bar of the bicycle frame, and in that the clamping means comprise a first clamping member for engaging a head post of the frame and a second clamping member for engaging a diagonal bracing bar of the frame.

The mounting assembly according to the invention thus has a main body that is fitted at the upper side of cross bar and has clamping members for fixating the main body with respect to the frame head post and the diagonal bracing bar. This mounting assembly can advantageously be fitted to most bicycle frames with a cross bar and is therefore widely usable.

The clamping means may comprise first tensioning means, in particular screws or bolts, which in a mounted state interconnect the first clamping member and the support member, for bringing the first clamping member and the support member in a clamping engagement with the head post of the bicycle frame.

Advantageously the clamping means comprise second tensioning means, in particular screws or bolts, which in a mounted state interconnect the second clamping member and the support member, for bringing the second clamping member in a clamping engagement with the diagonal bracing bar of the bicycle frame and the support member in a clamping engagement with the cross bar of the bicycle frame.

For most bikes one shaft length of the bolts or screws will be sufficient. However for greater or smaller frame dimensions other lengths can be used. Preferably widely available standard bolts or screws are used as first and/or second tensioning means such that several lengths suitable for the specific bicycle frame dimensions can be easily provided for.

In a preferred embodiment the main body of the support member has an upper plate and two side plates extending from the upper plate, such that the main body has a substantially U-shaped cross section in which the upper plate forms the base of the U and the side plates form the legs of the U, the upper plate in the mounted state being positioned on the upper side of the cross bar of the bicycle frame and the side plates passing along the cross bar. This embodiment provides a receiving space in the main body for the cross bar of the bicycle frame. When the support member is clamped on the frame the receiving space will assure that the support member, but also the child seat attached to it, will be securely fixed with respect to the frame.

In another preferred embodiment the second clamping member has a bended centre portion and two end flanges which adjoin the respective ends of the centre portion and which are provided with through holes for tensioning means, wherein the centre portion has a narrowing width from the flanges towards the centre. This specific shape is advantageous because it allows the second clamping member to be arranged in the angle region at the underside of the diagonal bracing bar, at the location where the latter joins the head post.

The invention will be described in more detail in the following description of a preferred embodiment with reference to the drawing, in which:
Fig. 1 shows a child seat which can be mounted to a bicycle frame with a mounting assembly according to the invention,
Fig. 2 shows the child seat of Fig. 1 mounted on a bicycle by means of a mounting assembly known from the prior art,
Fig. 3a shows a perspective view of a preferred embodiment of a mounting assembly according to the invention,
Fig. 3b shows a front view of the mounting assembly of Fig. 3a,
Fig. 3c shows a side view of the mounting assembly of Fig. 3a,
Fig. 3d shows a top view of the mounting assembly of Fig. 3a,
Fig. 4 shows a perspective view of a main body of the mounting assembly of Fig. 3,
Fig. 5 shows a perspective view of a first clamping member of the mounting assembly of Fig. 3,
Fig. 6 shows a perspective view of a second clamping member of the mounting assembly of Fig. 3,
Fig. 7 shows a perspective view of an inner cover for the main body of Fig. 4,
Fig. 8 shows a perspective view of a covering cap for the main body of Fig. 4,
Fig. 9 shows a bicycle with the mounting assembly of Fig. 3 mounted on it,
Fig. 10 is shown a front view of a main body of an alterantive mounting assembly, and
Fig. 11 is shown a part of a child seat provided with sockets adapted to be assembled with the main body of Fig. 10.

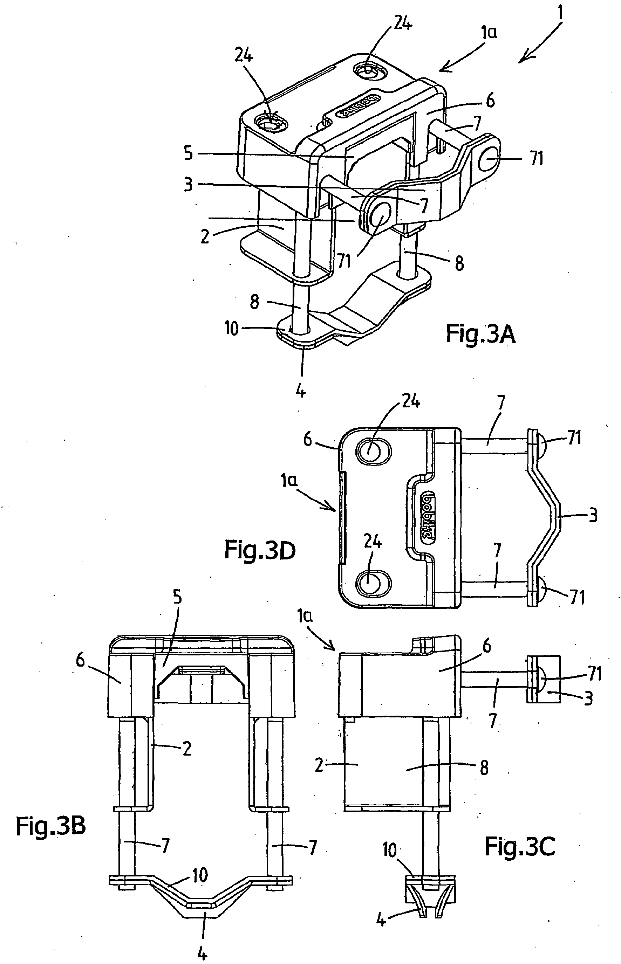

In Figs. 3a-3d is shown a mounting assembly 1 in an assembled state. The mounting assembly 1 comprises in general a support member 1a as well as a first clamping member 3 and a second clamping member 4 which are coupled with the support member 1a by means of first bolts 7 and second bolts 8 respectively. The support member 1a comprises a main body 2, an inner cover element 5 and an outer covering cap 6.

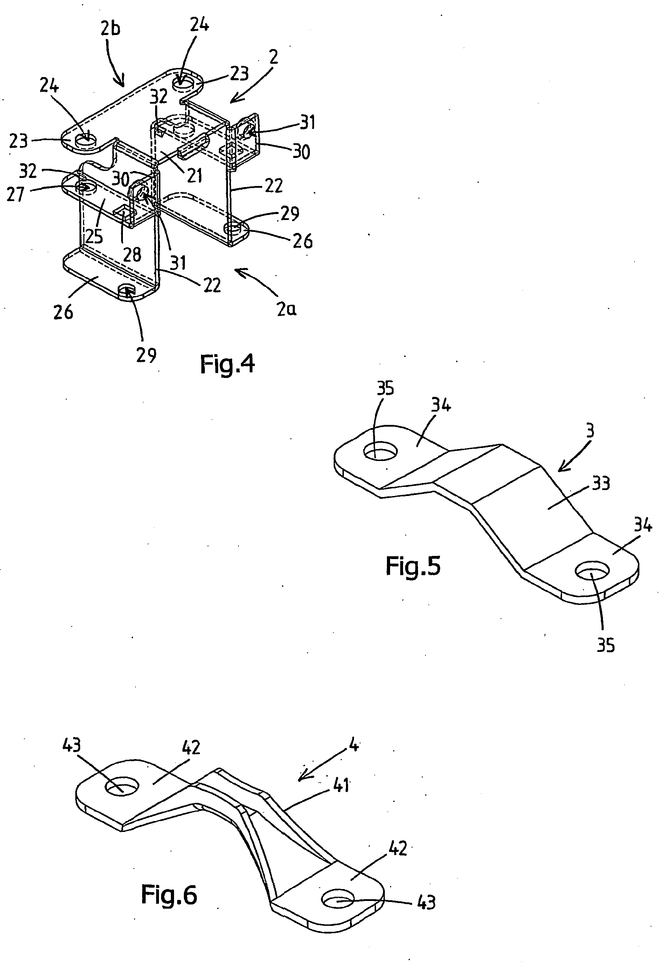

In Fig. 4 the main body 2 is shown separately. It has an upper plate 21 and two side plates 22 extending parallel to each other and substantially perpendicular from the upper plate 21. Consequently the main body 2 has a substantially U-shaped cross section in which the upper 21 plate forms the base of the U and the side plates 22 form the legs of the U.

The main body 2 has a font end 2a which in a mounted state is closest to the frame head and a rear end 2b opposite the front end 2a. At the rear end region of the upper plate 21 are arranged on either side laterally extending upper flanges 23, each provided with a through hole 24.

On each side plate 22 is arranged an intermediate flange 25 and a lower flange 26, both extending in a lateral direction and substantially parallel to the upper flanges 23. The intermediate flange 25 is spaced apart from the upper flange 23 and from the lower flange 26.

The intermediate flange 25 at its rear end region is provided with a through hole 27 which is in line with the through hole 24 in the upper flange. The through holes 24 and 27 are adapted to receive elongate assembly members like the assembly pins 102 of a child seat 101 as is depicted in Fig. 1. The through holes 24 and 27 thus constitute a receiving socket for the assembly pin 102 of the child seat.

The intermediate flange 25 at its front end region is provided with a through hole 28. The lower flange 26 at its front end region has a through hole 29 which is in line with the front end through hole 28 in the intermediate flange 25. The front end through holes 28 and 29 are adapted such that the shaft of the the first bolt 7 may pass through it. The head of the bolt 7 in the mounted state is in engagement with the area around the through hole 28.

On the front end of the intermediate flange 25 is provided a front flange 30 which extends substantially perpendicular with respect to the side plate 22 and the intermediate flange 25. The front flange 30 is provided with a through hole 31 which is adapted such that the shaft of the bolt 7 may pass through it. In a possible embodiment an inner thread is provided in the hole 31 which can cooperate with an outer thread on the bolt 7. It is also possible to provide a nut or other element with an inner thread behind the front flange 30 for cooperating with the threaded bolt 7.

The main body 2 is formed of metal. The main body can be made of cast metal or metal plate elements welded together, but is preferably formed in one piece from sheet metal, e.g. of 2,5 mm thick, by cutting and bending. After the required cuts have been made in the sheet metal blank the side plates 22 are formed by bending the parts concerned at an angle of about 90° with respect to the upper plate 21. The upper wings 23, which are cut outs in the side plates 22, remain in the same plane as the upper plate 21. The lower flange 26 is formed by bending the lower end of the side plate outwardly at an angle of about 90°. The front flange 30 is formed by bending the relevant part with the adjoining intermediate flange part outwardly with respect to the side plate 22 under an angle of about 90°. Next, the intermediate flange 25 is formed by bending the part to form the intermediate flange backwards along the side plate 22. The rear end of the intermediate flange 25 is attached to the side plate 22 by means of a welding joint 32, such that the intermediate flange 25 is supported at both ends.

In Fig. 5 is shown the first clamping member 3, with a bended centre portion 33 and two substantially flat end flanges 34. In each of the end flanges 34 is provided a through hole 35 through which the shaft of the first bolt 7 may pass. In the mounted state a bolt head 71 of the bolt 7 engages the outer flange surface around the hole 35. The first clamping member 3 is preferably made of sheet metal by cutting and bending. The first clamping member could also be made of a suitable plastic. The inner surface of the clamping member 3 is covered by a protective element 9 for protecting the head post of the bicycle frame, which it engages in use, against scratching and damage of the paint by the first clamping member 3. Suitable materials for the protective element 9 are for example soft plastics, rubber or felt, which are known to be scratch inhibiting.

Although not particularly preferred at this moment the first clamping member can be provided with one or more receiving sockets for receiving one or more assembly pins of a child seat. This is advantageous with a not shown child seat where the assembly pins in the mounted state have to be located in front of the head post of the bicycle frame instead of behind the head post as is the case with the assembly shown in Fig. 3.

In Fig. 6 is shown the second clamping member 4, with a bended centre portion 41 and two flat end flanges 42. In each of the end flanges 42 is provided a through hole 43 through which the shaft of the second bolt 8 may pass. The centre portion 41 has a narrowing width from each of the flanges 42 towards the centre. The second clamping member 4 is preferably made of sheet metal by cutting and bending, but could aslo be made of a suitable plastic. The inner surface of the second clamping member 4 is covered by an element 10 for protecting the diagonal bracing bar of the bicycle frame, which it engages in use, against scratching and damage of the paint. Suitable materials for the element 10 are scratch inhibiting materials, e.g. soft plastics, rubber or felt.

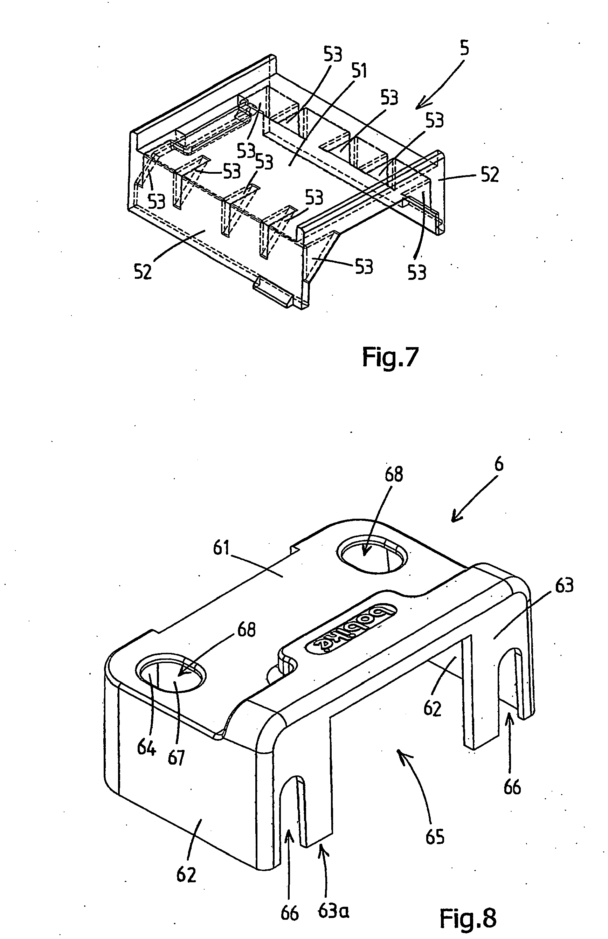

In Fig. 7 is shown the inner cover element 5 of the support member 1a. In an assembled state (cf. Fig. 3a) the cover element 5 is arranged against the lower side of the upper plate 21 between the side plates 22. The inner cover element 5 has a top wall 51 which is arranged against the lower side of the upper plate 21 of the main body 2. Furthermore, the cover element 5 has side walls 52 which are substantially perpendicular with respect to the top wall 51 and in the assembled state lie against the inner side of the side plates 22 of the main body 2. Between the top wall 51 and side walls 52 is arranged a plurality of triangularly shaped parallel gussets 53 for engagement on a cross bar of a bicycle frame. The inner cover element 5 is preferably made of a plastic material by means of injection moulding or another suitable manufacturing method. The material is chosen such that when mounting the support member 1a on the bicycle, the paint on the cross bar of the bicycle is not damaged.

In Fig. 8 is shown the outer covering cap 6. This cap 6 has a top wall 61 and side walls 62 extending at an angle of about 90° with respect to the top wall 61. The cap 6 furthemore has a front wall 63 and a rear wall 64. In the front wall 63 is provided a central recess 65 for bridging in a mounted state the cross bar of the bicycle frame. On both sides of the central recess 65 are provided elongate slots 66, which extend from a lower edge 63a upwardly, that is in the direction of the top wall 61. The slots 66 in the mounted state are arranged in a transverse manner over the first bolts 7 as is best visible in Fig. 3a. In the rear wall 64 is also provided a central recess 67 which is in line with the central recess 65 in the front wall and which is also for bridging the cross bar of the bicycle. In the top wall 91 are arranged two holes 68 which in an assembled state are in line with the holes 24 and 27 in the upper flanges 23 and intermediate flanges 25 respectively of the main body 2, such that the assembly pins 102 of the child seat can be inserted into the support member 1a. The cap 6 is preferably made of plastic material by means injection moulding.

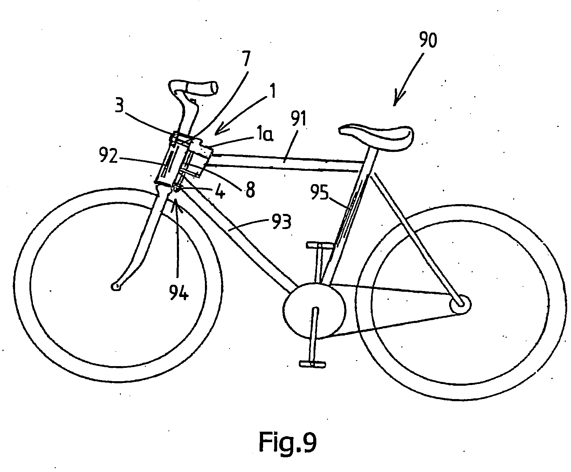

In Fig. 9 is shown a bicycle 90 with the mounting assembly 1 attached to it. The bicycle 90 has a frame comprising a cross bar 91, a head post 92, a diagonal bracing bar 93 and a saddle post 95. The mounting assembly 1 is mounted on the bicycle frame by arranging the support member 1a on top of the cross bar 91 against the rear side of the head post 92. The side plates 22 of the main body 2 pass along and possibly beyond the cross bar 91. The first clamping member 3 is arranged against the front side of the head post 92. The first bolts 7 are inserted through the holes 35 in the clamping member 3 and attached to the front flanges 30 of the main body 2. By tensioning the first bolts 7 the clamping member 3 and the support member 1a are tightly clamped against the headpost 92. The head of the second bolt 8 is in an assembled state locked between the main body 2 and the cap 6. The bolts 8 in the mounted state extend downward beyond the diagonal bracing bar 93 of the frame (cf. Fig. 9). The second clamping member 4 is slided over the bolt ends of the second bolts 8 and arranged in the angle region 94 between the head post 92 and the diagonal bracing bar 93 of the bicycle frame. Nuts are screwed on the threaded part of the second bolts 8 and the connection is tightened by tensioning the bolt/nut connection. The specific shape of the second clamping member 4 allows for a better arrangement and tighter engagement of it in the angle region 94 between the head post 92 and the diagonal bracing bar 93 of the bicycle frame.

Most of the bicycles with a cross bar 91 have some space at the head post 92 above the connection with the cross bar 91 and has an angle region 94 at the connection between the head post 92 and the lower diagonal bracing bar 93. Consequently the mounting assembly 1 described above can be widely used in combination with a whole variety of bicycle frames. The bolts 7 and 8 can be made available in a range of lengths, such that the user can readily select the suitable shaft length adapted for his bicycle frame dimensions. The rest of the assembly parts can be equal for the whole range of frame dimensions.

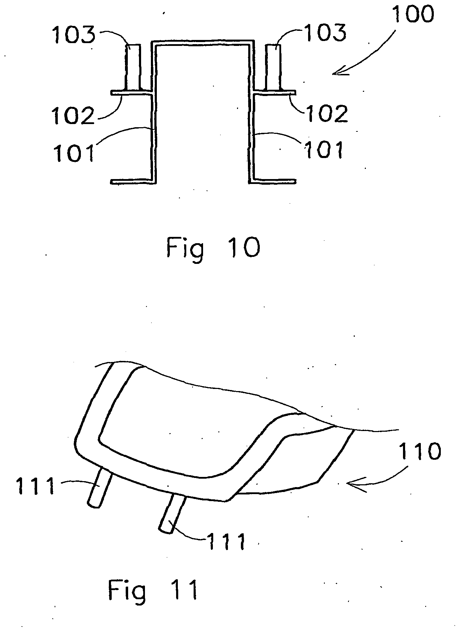

Although not particularly preferred at this moment, it is also envisaged that the support member of the mounting assembly is provided with one or more protruding assembly members, e.g. pins, which in a mounted state substantially extend parallel with the steering axis. In Fig. 10 an example of a main body of such a support member is shown, which is generally comparable with the one shown in Fig. 4. However, instead of the flanges 23 and 25 of the main body 2 (cf. Fig. 4) provided with the through holes 24, 27 constituting sockets, the side plates 101 of the main body 100 have each one flange 102 which is provided with an assembly pin 103 which in a mounted state extends in an upward direction. The child seat 110 in this embodiment, which is partly shown in Fig. 11, is provided with one or more receiving sockets, e.g. constituted by tubular members 111, for receiving the assembly members 103 of the support member. The main body 100 can be mounted on a bicycle in the same way as the main body 2 from Fig. 4.

It has to be understood that the embodiments described in the above with reference to the Figs. 3-11 are described as non limiting examples. Variations and modifications that fall within the scope of the claims are readily recognizable by a person skilled in the art.

## Claims

1. Mounting assembly 1 for mounting a child seat on a bicycle, comprising a support member 1a and clamping means for attaching the support member to a head portion of a bicycle frame, the support member 1e being provided with one or more receiving sockets 24, 27 each for receiving an assembly member fixedly attached to the child seat and protruding therefrom, which sockets in a mounted state substantially extend parallel with the steering axis,
**characterized in that** the support member 1e has a bearing portion for engaging an upper side of a substantially horizontal cross bar of the bicycle frame, and **in that** the clamping means comprise a first clamping member 3 for engaging a head post of the frame and a second clamping member 4 for engaging a diagonal bracing bar of the frame.

2. Mounting assembly according to claim 1, wherein the clamping means comprise first tensioning means, in particular screws or bolts, which in a mounted state interconnect the first clamping member and the support member, for bringing the first clamping member and the support member in a clamping engagement with the head post of the bicycle frame.

3. Mounting assembly according to claim 1 or 2, wherein the clamping means comprise second tensioning means, in particular screws or bolts, which in a mounted state interconnect the second clamping member and the support member, for bringing the second clamping member in a clamping engagement with the diagonal bracing bar of the bicycle frame and the support member in a clamping engagement with the cross bar of the bicycle frame.

4. Mounting assembly according to any of the preceding claims,
wherein the support member comprises a main body having an upper plate and two side plates extending from the upper plate, such that the main body has a substantially U-shaped cross section in which the upper plate forms the base of the U and the side plates form the legs of the U, the upper plate in the mounted state being positioned on the upper side of the cross bar of the bicycle frame and the side plates passing along the cross bar.

5. Mounting assembly according to claim 2, wherein the support member has at least one pair of first attachment holes for attachment with the first tensioning means.

6. Mounting assembly according to claim 5, wherein the first attachment holes are provided in a first flange on the main body.

7. Mounting assembly according to claim 3, wherein the support member has at least one pair of second attachment holes for attachment with the second tensioning means.

8. Mounting assembly according to claim 7, wherein the second attachment holes are provided in a second flange on the main body.

9. Mounting assembly according to any of the preceding claims,
wherein each of the receiving sockets in the support member for the assembly pins are constituted by through holes in at least two parallel flanges.

10. Mounting assembly according to claims 8 and 9, wherein the second flange constitutes one of the parallel flanges.

11. Mounting assembly according to any of the preceding claims,
wherein the main body of the support member is formed in one piece from sheet metal.

12. Mounting assembly according to any of the preceding claims,
wherein the support member further comprises an inner cover element of a scratch inhibiting material which covers the bearing portion of the main body.

13. Mounting assembly according to claim 12, wherein the inner cover element is made from plastic or rubber material.

14. Mounting assembly according to any of the preceding claims,
wherein the second clamping member has a bended centre portion and two end flanges which adjoin the respective ends of the centre portion and are provided with through holes for tensioning means, the centre portion having a narrowing width from the flanges towards the centre.

15. Mounting assembly according to any of the preceding claims,
wherein the first clamping member has a bended centre portion and two end flanges which adjoin the respective ends of the centre portion and are provided with through holes for tensioning means.

16. Mounting assembly according to any of the preceding claims,
wherein the clamping members have a protective layer of scratch inhibiting material provided on their engagement side, in particular plastic, rubber or felt.

17. Mounting assembly for mounting a child seat on a bicycle, the child seat comprising one or more sockets which in a mounted state substantially extend parallel with the steering axis, the mounting assembly 1e comprising a support member and clamping means for attaching the support member to a head portion of a bicycle frame, the support member 100 being provided with one or more protruding assembly members 103, **characterized in that** the support member has a bearing portion for engaging an upper side of a substantially horizontal cross bar of the bicycle frame, and wherein the clamping means comprise a first clamping member 3 for engaging a head post of the frame and a second clamping member 4 for engaging a diagonal bracing bar of the frame.

18. Combination of a mounting assembly according to any of the preceding claims and a bicycle child seat with one or more assembly members attached to it and protruding therefrom for coupling said seat with said mounting assembly.

## Patentansprüche

1. Befestigungsanordnung (1) zum Befestigen eines Kindersitzes auf einem Fahrrad, mit einem Trägerteil (1a) und einer Klemmvorrichtung zum Anbringen des Trägerteils an einem Kopfteil eines Fahrradrahmens, wobei das Trägerteil (1a) eine oder mehrere Aufnahmehalterungen (24, 27) zur Aufnahme jeweils eines am Kindersitz befestigten und über diesen hervorstehenden Montageteil hat, wobei sich die Halterungen im montierten Zustand im Wesentlichen parallel zur Lenkerachse erstrecken,
**dadurch gekennzeichnet, dass** das Trägerteil (1a) einen Lagerabschnitt zur Aufnahme einer oberen Seite einer im Wesentlichen horizontalen Querstange des Fahrradrahmens hat und dass die Klemmvorrichtung ein erstes Klemmteil (3) zum in Eingriff bringen mit einer vorderen Strebe des Rahmens sowie ein zweites Klemmteil (4) zum in Eingriff bringen mit einer diagonalen Versteifungsstange des Rahmens aufweist.

2. Anordnung nach Anspruch 1,
wobei die Spannvorrichtung erste Spannteile, insbesondere Schrauben oder Bolzen aufweisen, die im montierten Zustand das erste Klemmteil und das Trägerteil miteinander verbinden, um das erste Klemmteil und das Trägerteil mit dem Kopfteil des Fahrradrahmens in Klemmeingriff zu bringen.

3. Anordnung nach Anspruch 1 oder 2,
wobei die Spannvorrichtung zweite Spannteile aufweist, insbesondere Schrauben oder Bolzen, die in montiertem Zustand das zweite Klemmteil und das Trägerteil miteinander verbinden, um das zweite Klemmteil und die diagonale Versteifungsstange des Fahrradrahmens und das Trägerteil mit der Querstange des Fahrradrahmens miteinander verspannen.

4. Anordnung nach einem der vorhergehenden Ansprüche,
wobei das Trägerteil einen Grundkörper mit einer oberen Platte und zwei von der oberen Platte aus sich erstreckende Seitenplatten aufweist, so dass der Grundkörper einen im Wesentlichen U-förmigen Querschnitt hat, in dem die obere Platte die Basis des U und die Seitenplatten die Schenkel des U bilden, wobei die obere Platte im montierten Zustand auf der Oberseite der Querstange des Fahrradrahmens liegt und die Seitenplatten entlang der Querstange verlaufen.

5. Anordnung nach Anspruch 2,
wobei das Trägerteil mindestens ein Paar erster Befestigungsöffnungen zur Befestigung mit den ersten Spannteilen aufweist.

6. Anordnung nach Anspruch 5,
wobei die ersten Befestigungsöffnungen in einem ersten Flansch auf dem Grundkörper vorgesehen sind.

7. Anordnung nach Anspruch 3,
wobei das Trägerteil mindestens ein Paar zweiter Befestigungsöffnungen zur Befestigung mit den zweiten Spannteilen aufweist.

8. Anordnung nach Anspruch 7,
wobei die zweiten Befestigungsöffnungen in einem zweiten Flansch auf dem Grundkörper vorgesehen sind.

9. Anordnung nach einem der vorhergehenden Ansprüche,
wobei jede der Aufnahmehalterungen im Trägeteil für die Anschlussbolzen durch Durchgangsöffnungen in mindestens zwei parallelen Flanschen gebildet sind.

10. Anordnung nach Anspruch 8 und 9,
wobei der zweite Flansch einen der parallelen Flansche bildet.

11. Anordnung nach einem der vorhergehenden Ansprüche,
wobei der Grundkörper des Trägerteils einstückig aus Metallblech geformt ist.

12. Anordnung nach einem der vorhergehenden Ansprüche,
wobei das Trägerteil außerdem ein inneres Abdeckelement aus einem kratzfesten Material aufweist, das den Lagerteil des Grundkörpers abdeckt.

13. Anordnung nach Anspruch 12,
wobei das innere Abdeckelement aus Kunststoff oder Gummi gebildet ist.

14. Anordnung nach einem der vorhergehenden Ansprüche,
wobei das zweite Klemmteil einen gebogenen Mittelteil und zwei Endflansche hat, die an die entsprechenden Enden des Mittelteils anschließen und die mit Durchgangsöffnungen für Spannteile versehen sind, wobei die Breite des Mittelteils von den Flanschen zum Zentrum hin abnimmt.

15. Anordnung nach einem der vorhergehenden Ansprüche,
wobei das erste Befestigungsteil einen gebogenen Mittelteil und zwei Endflansche hat, die an die jeweiligen Enden des Mittelteils anschlie-βen und die mit Durchgangsöffnungen für Spannteile versehen sind.

16. Anordnung nach einem der vorhergehenden Ansprüche,
wobei die Klemmteile eine Schutzschicht aus kratzfestem Material insbesondere Kunststoff, Gummi oder Filz aufweisen, die an ihrer Angriffsseite vorgesehen sind.

17. Anordnung zur Montage eines Kindersitzes auf einem Fahrrad, wobei der Kindersitz eine oder mehrere Halterungen aufweist, die sich in montiertem Zustand im Wesentlichen parallel zur Lenkerachse erstrecken, wobei die Anordnung (1) ein Trägerteil und Klemmteile zum in Eingriff bringen des Trägerteiles mit einem Kopfteil eines Fahrradrahmens aufweisen und das Trägerteil (100) eine oder mehrere vorstehende Montageteile (103) hat, **dadurch gekennzeichnet, dass** das Trägerteil einen Lagerabschnitt zur Aufnahme einer oberen Seite einer im Wesentlichen horizontalen Querstange des Fahrradrahmens hat und dass die Spannvorrichtung ein erstes Klemmteil (3) zum in Eingriff bringen eines Kopfteils des Rahmens und eines zweiten Klemmteiles (4) zum in Eingriff bringen einer diagonalen Versteifungsstange des Rahmens aufweist.

18. Kombination einer Befestigungsanordnung nach einem der vorhergehenden Ansprüche und einem Fahrradkindersitz mit einem oder mehreren mit ihm verbundenen und über ihn vorstehenden Montageteilen, um den Sitz mit der Anordnung zu kuppeln.

## Revendications

1. Ensemble de montage (1) pour monter un siège enfant sur une bicyclette, comprenant un élément de support et un moyen de serrage pour attacher l'élément de support sur une portion de tête d'un cadre de bicyclette, l'élément de support (1a) étant pourvu d'un ou plusieurs logements de réception (24, 27), chacun pour recevoir un élément d'assemblage attaché de manière fixe au siège enfant et en projection depuis celui-ci, lesdits logements s'étendant, dans une situation montée, sensiblement parallèles à l'axe de direction,
**caractérisé en ce que** l'élément de support (1a) comprend une portion portante pour engager un côté supérieur d'une traverse sensiblement horizontale du cadre de bicyclette, et **en ce que** le moyen de serrage comprend un premier élément de serrage (3) pour engager un montant de tête du cadre et un second élément de serrage (4) pour engager une barre entretoise diagonale du cadre.

2. Ensemble de montage selon la revendication 1, dans lequel le moyen de serrage comprend un premier moyen de tensionnement, en particulier à vis ou à boulon, qui interconnecte, dans une situation montée, le premier élément de serrage et l'élément de support, pour amener le premier élément de serrage et l'élément de support dans un engagement de serrage avec le montant de tête du cadre de bicyclette.

3. Ensemble de montage selon la revendication 1 ou 2, dans lequel le moyen de serrage comprend un second moyen de tensionnement, en particulier à vis ou à boulon, qui interconnecte, dans une situation montée, le second élément de serrage et l'élément de support, pour amener le second élément de serrage dans un engagement de serrage avec la barre entretoise diagonale du cadre de bicyclette et l'élément de support dans un engagement de serrage avec la traverse du cadre de bicyclette.

4. Ensemble de montage selon l'une quelconque des revendications précédentes, dans lequel l'élément de support comprend un corps principal ayant une plaque supérieure et deux plaques latérales s'étendant depuis la plaque supérieure, de telle façon que le corps principal possède une section transversale sensiblement en forme de U dans laquelle la plaque supérieure forme la base du U et les plaques latérales forment les branches du U, la plaque supérieure étant positionnée, dans la situation montée, sur le côté supérieur de la traverse du cadre de bicyclette, et les plaques latérales passant le long de la traverse.

5. Ensemble de montage selon la revendication 2, dans lequel l'élément de support comprend au moins une paire de premiers trous d'attache pour être attaché avec le premier moyen de tensionnement.

6. Ensemble de montage selon la revendication 5, dans lequel les premiers trous d'attache sont prévus dans une première bride sur le corps principal.

7. Ensemble de montage selon la revendication 3, dans lequel l'élément de support comporte au moins une paire de seconds trous d'attache pour être attaché avec le second moyen de tensionnement.

8. Ensemble de montage selon la revendication 7, dans lequel les seconds trous d'attache sont prévus dans une seconde bride sur le corps principal.

9. Ensemble de montage selon l'une quelconque des revendications précédentes, dans lequel chacun des logements de réception dans l'élément de support pour les broches d'assemblage sont constitués par des trous traversants dans au moins deux brides parallèles.

10. Ensemble de montage selon les revendications 8 et 9, dans lequel la seconde bride constitue l'une des brides parallèles.

11. Ensemble de montage selon l'une quelconque des revendications précédentes, dans lequel le corps principal de l'élément de support est formé d'une seule pièce en tôle métallique.

12. Ensemble de montage selon l'une quelconque des revendications précédentes, dans lequel l'élément de support comprend en outre un élément de couverture intérieur avec un matériau empêchant les rayures, qui couvre la portion portante du corps principal.

13. Ensemble de montage selon la revendication 12, dans lequel l'élément de couverture intérieur est réalisé en matière plastique ou en matériau caoutchouteux.

14. Ensemble de montage selon l'une quelconque des revendications précédentes, dans lequel le second élément de serrage comporte une portion centrale cintrée et deux brides terminales qui sont jointives aux extrémités respectives de la portion centrale et qui sont pourvues de trous traversants pour les moyens de tensionnement, la portion centrale ayant une largeur qui va en se rétrécissant depuis les brides vers le centre.

15. Ensemble de montage selon l'une quelconque des revendications précédentes, dans lequel le premier élément de serrage comprend une portion centrale cintrée et deux brides terminales qui sont jointives aux extrémités respectives de la portion centrale et qui sont pourvues de trous traversants pour les moyens de tensionnement.

16. Ensemble de montage selon l'une quelconque des revendications précédentes, dans lequel les éléments de serrage ont une couche protectrice en matériau empêchant les rayures, prévue sur le côté engagement, en particulier en matière plastique, en caoutchouc ou en feutre.

17. Ensemble de montage pour monter un siège enfant sur une bicyclette, le siège enfant comprenant un ou plusieurs logements qui, dans une situation montée, s'étendent sensiblement parallèles à l'axe de direction, l'ensemble de montage (1a) comprenant un élément de support et un moyen de serrage pour attacher l'élément de support à une portion de tête d'un cadre de bicyclette, l'élément de support (100) étant pourvu d'un ou plusieurs éléments d'assemblage en projection (103), **caractérisé en ce que** l'élément de support comprend une portion portante pour engager un côté supérieur d'une traverse sensiblement horizontale du cadre de bicyclette, et dans lequel le moyen de serrage comprend un premier élément de serrage (3) pour engager un montant de tête du cadre et un second élément de serrage (4) pour engager une barre entretoise diagonale du cadre.

18. Combinaison d'un ensemble de montage selon l'une quelconque des revendications précédentes et d'un siège enfant pour bicyclette avec un ou plusieurs éléments d'assemblage attachés sur lui-même et en projection de celui-ci pour coupler ledit siège avec ledit ensemble de montage.
